Europäisches Patentamt

(19) European Patent Office

Office européen des brevets

(11) Veröffentlichungsnummer: **0 269 781**

**A1**

(12) **EUROPÄISCHE PATENTANMELDUNG**

(21) Anmeldenummer: **87103661.2**

(22) Anmeldetag: **13.03.87**

(51) Int. Cl.³: **G 01 P 13/02**
**G 01 P 5/12, G 01 F 1/68**
**G 01 P 13/00**

(30) Priorität: **04.11.86 DE 3637541**

(43) Veröffentlichungstag der Anmeldung:
**08.06.88 Patentblatt 88/23**

(84) Benannte Vertragsstaaten:
**DE FR GB IT SE**

(71) Anmelder: **VDO Adolf Schindling AG**
**Gräfstrasse 103**
**D-6000 Frankfurt/Main(DE)**

(72) Erfinder: **Weibler, Wolfgang, Dr.**
**Vor der Heide 14**
**D-6238 Hofheim a. T.(DE)**

(72) Erfinder: **Wolfgang, Porth**
**Röhrborngasse 70**
**D-6000 Frankfurt am Main(DE)**

(74) Vertreter: **Klein, Thomas, Dipl.-Ing. (FH)**
**Sodener Strasse 9 Postfach 6140**
**D-6231 Schwalbach a. Ts.(DE)**

(54) Vorrichtung zur Bestimmung des Massenstromes und der Durchflussrichtung.

(57) Um den korrekten Massenstrom eines rasch pulsierenden Fluidstromes insbesondere im Ansaugkanal (10) eines Verbrennungsmotors zu ermitteln, wird eine Vorrichtung zur Bestimmung des Massenstromes und der Durchflußrichtung mit einem Temperatursensor (17), einem thermoelektrischen Massenfluß-Sensor (16) und zwei zu diesem benachbart angeordneten Temperatur-Meßelementen (12, 14) vorgeschlagen, wobei je nach Strömungsrichtung das eine Temperatur-Meßelement (12 oder 14) im Zustrom und das andere Temperatur-Meßelement (14 bzw. 12) im Abstrom vom thermischen Massenfluß-Sensor (16) angeordnet ist.

FIG. 1

EP 0 269 781 A1

VDO Adolf Schindling AG

Gräfstraße 103
6000 Frankfurt/Main
28. Oktober 1986
2033

Beschreibung:


# Vorrichtung zur Bestimmung des Massenstromes und der Durchflußrichtung


Die Erfindung betrifft eine Vorrichtung zur Bestimmung des Massenstromes und der Durchflußrichtung eines mit bekanntem Massenstrom im wesentlichen gerichtet strömenden Fluids mit einer einen thermoelektrischen Massenfluß-Sensor und einen Temperatur-Sensor aufweisenden Massenstrom-Meßvorrichtung und zumindest einem Temperatur-Meßelement.

Die Steuerung der Treibstoffeinspritzung von Verbrennungs-Motoren erfolgt in Abhängigkeit vom Massenstrom der Ansaugluft. Zur Messung des Massenstroms dient in vielen Fällen eine nach dem elektrothermischen Prinzip arbeitende Massenstrom-Meßvorrichtung. Eine derartige Meßvorrichtung weist zur Temperaturkompensation zumindest einen Temperatur-Sensor und einen Massenfluß-Sensor auf, dessen Hauptbestandteil ein elektrisch heizbares im Massenstrom angeordnetes Widerstandselement ist. Die Wärmeableitung von diesem Heizelement ist ein Maß für den Massenstrom, wobei umsomehr Wärme abgeführt wird, je stärker der Massenstrom ist.

Eine derartige Massenstrom-Meßvorrichtung ist bezüglich der Strömungsrichtung sehr unempfindlich, denn unabhängig davon, ob die Strömung vorwärts oder rückwärts gerichtet ist, wird entsprechend der Wärmeableitung praktisch das gleiche elektrische Signal abgegeben. Mit anderen Worten kann mit einer bekannten Massenstrom-Meßvorrichtung lediglich der Betrag des Massenstroms ermittelt werden, nicht aber dessen Strömungsrichtung. Es hat sich nun gezeigt, daß im Ansaugsystem von Verbrennungsmotoren bei bestimmten Betriebszuständen Schwingungen der Luftsäule eintreten, welche der konstanten Strömung überlagert sind, so daß daraus eine rasch pulsierende Strömung resultiert. Je nach minütlicher Drehzahl und Zylinderzahl liegt die Grundfrequenz der Schwingung im Bereich zwischen 10 und 1000 Hertz. Je nach Strömungsgeschwindigkeit und Schwingungsamplitude treten während kurzer Zeitintervalle Rückströmungen auf. Aufgrund des oben geschilderten Meßprinzips der Massenstrom-Meßvorrichtung erzeugen Rückströmungen ein gleiches Meßsignal wie Ansaugströmungen, so daß letztlich eine zu hohe Menge an Treibstoff dem Motor zugeführt wird.

Es sind richtungsempfindliche Strömungsmesser bekannt, die zwei auf gemeinsamem Tragkörper angeordnete Widerstands-Elemente aufweisen, die in Strömungsrichtung hintereinander liegend eingebaut werden. Derartige Strömungsmesser eignen sich dem Stand der Technik nach aufgrund ihrer Trägheit jedoch nicht zur Erfassung schneller Änderungen der Strömung.

3

0269781

Aufgabe der vorliegenden Erfindung ist es, eine insbesondere im Ansaugsystem eines Verbrennungsmotors anordbare rasch ansprechende Vorrichtung zur gleichzeitigen Bestimmung des Massenstromes und der Durchflußrichtung eines pulsierenden Luftstromes während des Zeitraums einer Pulsation zu schaffen.

Erfindungsgemäß wird die Aufgabe dadurch gelöst, daß bei einer Vorrichtung nach dem Oberbegriff des Anspruchs 1 benachbart zum thermischen Massenfluß-Sensor zwei Temperatur-Meßelemente angeordnet sind, wobei je nach Strömungsrichtung das eine Temperatur-Meßelement im Zustrom und das andere Temperatur-Meßelement im Abstrom vom thermischen Massenfluß-Sensor angeordnet ist. Dadurch wird erreicht, daß vom thermischen Massenfluß-Sensor Wärme auf das jeweils im Abstrom angeordnete Temperatur-Meßelement übertragen wird, so daß dieses stets eine höhere Temperatur aufweist als das im Zustrom angeordnete Tempertur-Meßelement. Infolge unterschiedlicher Temperaturen geben die beiden Temperatur-Meßelemente unterschiedliche elektrische Signale ab, deren Differenz je nach Strömungsrichtung positiv oder negativ ist.

In der bevorzugten Ausführungsform der erfindungsgemäßen Vorrichtung ist im Zentrum des Fluidstromes ein thermischer Massenfluß-Sensor vorgesehen, und je eines der beiden Temperatur-Meßelemente ist im Strömungsverlauf vor bzw. hinter dem thermischen Massenfluß-Sensor angeordnet. Die Anordnung der Temperatur-Meßelemente erfolgt vorzugsweise symmetrisch zum thermischen Massenfluß-Sensor. Rasches Ansprechen der Temperatur-Meßelemente wird dadurch erreicht, daß diese selbst eine geringe Massenträgheit aufweisen, und daß die Abstände zum thermischen Massenfluß-Sensor klein sind. Das rasche Ansprechen der Vorrichtung wird zusätzlich dadurch erleichtert, daß diese im Zentrum der Strömung angeordnet ist.

Eine rasche und sichere Montage der Vorrichtung wird ermöglicht, wenn Massenfluß-Sensor, Temperatur-Sensor und die beiden Temperatur-Meßelemente eine gemeinsame Halterung aufweisen. In diesem Falle ist die exakte räumliche Zuordnung sämtlicher Elemente gewährleistet und der elektrische Anschluß kann über ein Verbindungskabel mit einem einzigen Vielfachstecker erfolgen. Als Halterung kann beispielsweise eine Schaltplatine dienen, welche eine längliche Aussparung aufweist, wobei die Schaltplatine selbst im Zentrum des Massenstromes angeordnet ist. Es versteht sich von selbst, daß die Ebene der Schaltplatine parallel zur Strömungsrichtung angeordnet ist. Dabei ist das eine Ende der länglichen Aussparung dem anströmenden Fluid zugewandt und die Längsachse der länglichen Aussparung verläuft genau im Zentrum der Strömung. Bei dieser Anordnung werden vorteilhafterweise die einzelnen Elemente senkrecht zur Strömungsrichtung die Aussparung der Platine überbrückend angeordnet. Es hat sich besonders bewährt, die einzelnen Bauelemente in Strömungsrichtung gesehen in folgender Reihenfolge anzuordnen: Temperatur-Sensor, erstes Temperatur-Meßelement, Massenfluß-Sensor, zweites Temperatur-Meßelement.

Eine sichere Wärmeübertragung vom thermischen Massenfluß-Sensor auf das im Abstrom angeordnete Temperatur-Meßelement wird auch bei unterschiedlichen Strömungsgeschwindigkeiten dann erreicht, wenn der thermische Massenfluß-Sensor und die diesem zugeordneten Temperatur-Meßelemente in einem Bereich laminarer Strömung angeordnet sind. Eine laminare Strömung kann beispielsweise dadurch erreicht werden, daß vor bzw. hinter der Vorrichtung jeweils ein "Strömungsgleichrichter" angeordnet ist, ein mit parallelen Kanälen versehener Körper wie Wabenkörper.

Die Höhe des von den beiden Temperatur-Meßelementen abgegebenen Signals ist nicht nur von der Strömungsrichtung sondern auch von der Strömungsgeschwindigkeit des Fluids sowie von der Temperatur des thermischen Massenfluß-Sensors abhängig. Eine Verbesserung der Gleichmäßigkeit der

0269781

Empfindlichkeit wird erreicht, wenn die Temperatur des Massenfluß-Sensors in bereits bekannter Weise geregelt wird. Dabei wird dessen Temperatur auf einen konstanten absoluten Wert oder aber auf einen konstanten Differenzwert zur Temperatur des anströmenden Fluids geregelt, wobei dessen Temperatur mit dem Temperatur-Sensor ermittelt wird.

Erfindungsgemäß wird vorgeschlagen, die Temperatur-Meßelemente als temperaturabhängige Widerstandselemente auszubilden, die als Spannungsteiler in einer Brückenschaltung angeordnet sind. Dabei bewirken Temperaturänderungen Widerstandsänderungen und diese führen zur Verstimmung der Brückenschaltung, so daß die an der Brückendiagonalen abgegriffene Spannung je nach Strömungsrichtung positiv oder negativ ist.

Metallische Widerstandselemente mit positiven Temperaturkoeffizienten (PTC) und hoher Stabilität wie Nickel oder Platin sind wegen ihrer Darstellbarkeit als dünne Drähte, Folien oder Filme besonders vorteilhaft. Widerstandselemente mit negativem Temperaturkoeffizienten (NTC) sind vorteilhaft, wenn es besonders auf große Temperaturkoeffizienten und damit große Sensorsignale ankommt.

Ein rasches Ansprechen der Widerstandselemente ist gewährleistet, wenn diese drahtförmig ausgebildet sind. Dabei werden die Widerstandselemente freistehend in der Strömung angeordnet. Über den Querschnitt des Drahtes kann die Massenträgheit und somit die Ansprechzeit eines Widerstandselementes beeinflußt werden. Unter "Draht" ist hier jegliche langgestreckte Ausbildung des Widerstandes zu verstehen, wobei der Querschnitt rund, eckig oder flach sein kann. Insbesondere bei dünnen Drähten, welche ein rasches Ansprechen ermöglichen, ist Rücksicht auf die mechanische Stabilität zu nehmen. Die Anordnung kann sowohl in gestreckter Form als auch in

Mäandern oder Spiralen erfolgen, wobei die Ebene der Mäander bzw. der Spiralen vorzugsweise in Längsrichtung zur Strömung angeordnet ist.

Es hat sich auch bewährt, Widerstandselemente folienförmig auszubilden, wobei die Widerstandsschicht auf ein Substrat mit geringer Wärmekapazität und geringer Wärmeleitfähigkeit aufgebracht ist.

Derartige Widerstandselemente können insbesondere in mikrotechnische Bauelemente integriert werden.

Es hat sich auch bewährt, zur Regelung der Speisespannung der Brückenschaltung das Signal der Massenstrom-Meßvorrichtung heranzuziehen. So wird vorteilhafterweise die Speisespannung bei hohen Durchflüssen abgesenkt, was zu einer gleichmäßigen Signalhöhe im gesamten Meßbereich führt. Dies ist insbesondere beim Betrieb der erfindungsgemäßen Vorrichtung im Ansaugsystem eines Kraftfahrzeuges angebracht, das sowohl im Winter bei einer Lufttemperatur von -40°C als auch im Hochsommer bei einer Lufttemperatur von über +60°C einwandfrei funktionieren soll.

In einer weiteren Ausgestaltung der Erfindung wird vorgeschlagen, Thermoelemente als Temperatur-Meßelemente vorzusehen. Thermoelemente haben den Vorteil, daß sie zur punktförmigen Temperaturerfassung geeignet sind und bei geringer räumlicher Ausdehnung unempfindlich gegen mechanische Beanspruchungen sind.

Die Information über die Strömungsrichtung des Fluids wird aus der Temperaturdifferenz der beiden Temperatur-Meßelemente abgeleitet. Es ist daher beim Einsatz von Thermoelementen vorteilhaft, zwei elektrisch gleichpolige Schenkel der beiden Thermoelemente innerhalb der Vorrichtung direkt miteinander zu verbinden, so daß nur je ein Schenkel eines jeden Thermoelementes herausgeführt ist. Somit liegt zwischen diesen beiden Schenkeln nur die Differenzspannung beider Thermoelemente an. Da beide Schenkel aus dem gleichen Material bestehen, sind an elektrischen Anschlußelementen auftretende Thermospannungen automatisch kompensiert. Zur Erzielung einer hohen Thermospannung können mehrere Thermoelemente zu einer Thermoelementbatterie hintereinandergeschaltet werden, wenn eine punktförmige Temperaturmessung nicht erforderlich ist.

In weiterer Ausbildung der Erfindung wird vorgeschlagen, die erfindungsgemäße Vorrichtung in eine an sich bekannte Vorrichtung zur Steuerung der Treibstoff-Einspritzung in Abhängigkeit vom Massenstrom der angesaugten Luftmenge schaltungsmäßig zu integrieren, wobei die Treibstoff-Dosierung in Abhängigkeit von den abgegebenen Signalen der Temperatur-Meßelemente erfolgt. Auf diese Weise ist es möglich, die in bestimmten Betriebszuständen eintretende zu hohe Dosierung von Treibstoff zu vermindern, sobald über die erfindungsgemäße Vorrichtung eine Rückströmung im Ansaugsystem des Verbrennungsmotors festgestellt ist.

Eine besonders vorteilhafte Ausführungsform der erfindungsgemäßen Vorrichtung liegt dann vor, wenn die Temperatur-Meßelemente mit dem Eingang eines Verstärkers verbunden sind, dessen Ausgang über einen Schmitt-Trigger mit dem Eingang einer Steuereinheit verbunden ist, welche mit einem zweiten Eingang außerdem mit der Massenstrom-Meßvorrichtung verbunden ist und ausgangsseitig mit einer Treibstoff-Dosiervorrichtung verbunden ist. Dabei wird das von der an sich bekannten Massenstrom-Meßvorrichtung an die ebenfalls bekannte Treibstoff-Dosiervorrichtung abgegebene Meßsignal erfindungsgemäß durch das von der Durchflußrichtung abhängige Korrektursignal beeinflußt. Da beide Signale in einem rasch pulsierenden Ansaugluftstrom ständigen Änderungen unterworfen sind, wird das richtungsabhängige Korrektursignal über einen

Schmitt-Trigger als Schwellwert-Schalter eingespeist, um ein unnötiges Aufschaukeln der Regelkreise bei kleinen Signalpegeln zu unterdrücken.

Es hat sich weiterhin bewährt, das der Pulsation unterliegende Ausgangssignal der Steuereinheit vor dem Eingang in die Treibstoff-Dosiervorrichtung durch einen Integrator zu glätten.

Sofern die Massenstrom-Meßvorrichtung und die Temperatur-Meßelemente unterschiedliche Ansprechzeiten aufweisen, kann es vorkommen, daß die entsprechenden Signale zeitlich verschoben zueinander eintreffen. Es ist dann empfehlenswert, zwischen dem Ausgang des Schmitt-Triggers und dem Eingang der Steuereinheit einen Phasenschieber anzuordnen. Wird in besonderen Fällen eine von der Zeitdauer des Korrektursignals verschiedene Zeitdauer der Beeinflussung des Meßsignals gewünscht, so ist es vorteilhaft, vor dem Eingang der Steuereinheit einen Monoflop anzuordnen. Dadurch kann ein kurzer eingehender Impuls entsprechend verlängert oder auch verkürzt werden.

Das Korrektursignal kann grundsätzlich in verschiedener Weise auf das Meßsignal einwirken. Dabei hat es sich bewährt, daß ein Korrektursignal nur dann abgegeben wird, wenn eine Rückströmung stattfindet, d.h., daß bei Strömung in Ansaugrichtung kein Signal an die Steuereinheit abgegeben wird. Das Korrektursignal kann grundsätzlich auf drei besonders vorteilhafte Weisen auf das Meßsignal einwirken:

1. Die Steuereinheit kann das von der Massenfluß-Meßvorrichtung eingehende Meßsignal so lange unterdrücken, wie ein Korrektursignal am zweiten Eingang der Steuereinheit anliegt. Auf diese einfache Art und Weise kann das unnötige und schädliche Überdosieren des Treibstoffes vermieden werden. Es versteht sich von selbst, daß gerade bei einer derartigen Vorrichtung einem das Ausgangssignal glättenden Integrator besondere Bedeutung zukommt.

2. Die Steuereinheit kann den während der Zeitdauer eines am Eingang anliegenden Korrektursignals festgestellten Wert des Meßsignals von demjenigen Wert des Meßsignals subtrahieren, der im Zeitraum des ausbleibenden Korrektursignals festgestellt ist. Diese theoretisch korrekte Beeinflussung setzt voraus, daß sowohl der Massenstrom als auch die Strömungsrichtung völlig trägheitslos und unter gleichen Meßbedingungen festgestellt werden. Dies ist in der Praxis nur mit großem Aufwand zu erreichen. So besitzt auch die Massenfluß-Meßvorrichtung einen gewissen integrierenden Charakter, da die bei Rückströmung vom Meßelement erwärmte Luft nach Wechsel zur normalen Strömungsrichtung das Meßelement nochmals bestreicht und somit weniger abkühlt. Daher hat sich die nachfolgend beschriebene Beeinflussung als wirtschaftlich am sinnvollsten herausgestellt.

3. Die Steuereinheit kann den während der Zeitdauer eines am Eingang anliegenden Korrektursignals festgestellten Wert des Meßsignals auf einen vorher bestimmten Bruchteil reduzieren. Durch Vorgabe des Bruchteils sowie dessen Variation in Abhängigkeit vom Massenstrom und/oder der Drehzahl des Motors ist eine optimale Anpassung an die verschiedenen Betriebszustände und die technischen Gegebenheiten der Meßvorrichtungen möglich.

Eine besonders kompakte und servicefreundliche Ausführung der erfindungsgemäßen Vorrichtung wird erreicht, wenn zusätzlich zu den Sensoren und Meßelementen auch die elektronischen Bausteine auf einer gemeinsamen Halterung angeordnet sind. Es wird daher vorgeschlagen, auf der oben beschriebenen Platine zusätzlich zu den Sensoren und Meßelementen sämtliche elektronischen Bausteine anzuordnen. Dabei werden diese Bausteine vorteilhafterweise zu einer einzigen Meß- und Regeleinheit zusammengefaßt, die auf einem Mikrochip angeordnet sein kann. Bei dieser Anordnung können sämtliche Bauteile individuell aufeinander abgestimmt sein. Hier ist insbesondere die Abgleichung der Brückenschaltung und die Anpassung des Korrektursignals an das Meßsignal zu erwähnen. Eine derartige elektrische und mechanische Einheit wird im Falle einer Beschädigung komplett ausgewechselt, ohne daß in der Werkstatt weitere Arbeiten anfallen. Elektrisch muß eine derartige Einheit lediglich an eine Stromquelle und an die Treibstoff-Dosiervorrichtung angeschlossen werden. Gegebenenfalls ist höchstens noch eine Verbindung mit einem Drehzahlgeber herzustellen.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachstehenden Beschreibung von den in der Zeichnung dargestellten bevorzugten Ausführungsbeispielen.

Es zeigen:

Fig. 1   in schematischer Seitenansicht die Anordnung eines Ausführungsbeispiels der erfindungsgemäßen Vorrichtung,

Fig. 2   den schematischen Schaltplan einer Brückenschaltung der erfindungsgemäßen Vorrichtung mit temperaturabhängigen Widerständen,

Fig. 3   den schematischen Schaltplan einer weiteren Ausführung der erfindungsgemäßen Vorrichtung mit Thermoelementen,

Fig. 4   schematisch die Schaltungsanordnung zur Steuerung der Treibstoff-Dosiervorrichtung in Weiterbildung der erfindungsgemäßen Vorrichtung.

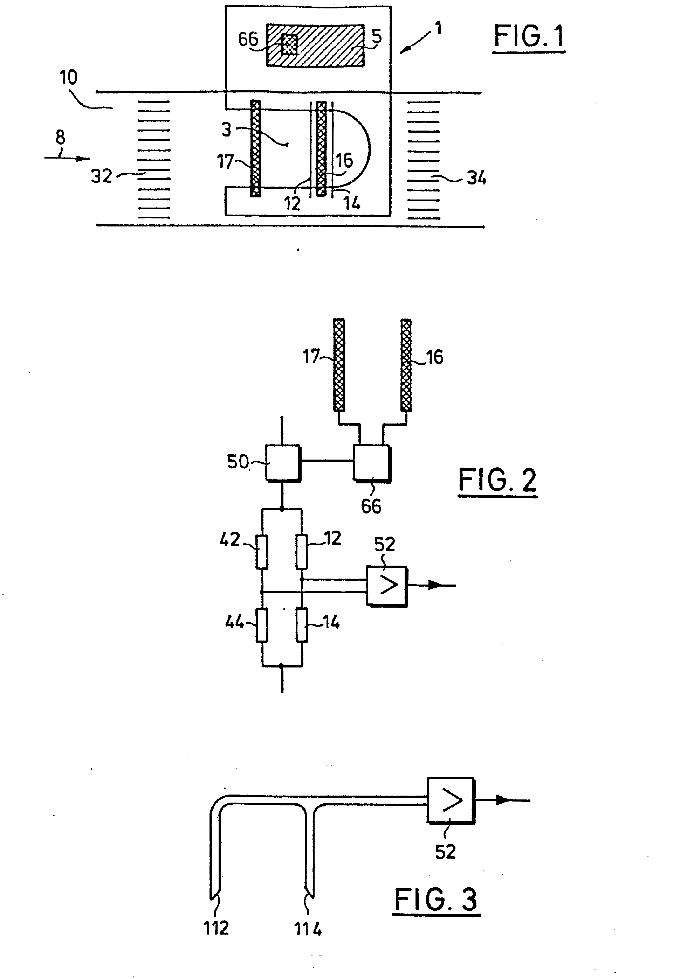

Figur 1 zeigt die geometrische Anordnung einer erfindungsgemäßen Vorrichtung in einem Strömungskanal (10). Die Strömungsrichtung ist durch einen Pfeil (8) markiert. In Strömungsrichtung gesehen ist zuerst ein strömungsunabhängiger Temperatur-Sensor (17) angeordnet und hinter diesem ein geheizter thermischer Massenfluß-Sensor (16). Beide Sensoren sind einer in eine Meß- und Regeleinheit (5) integrierten Massenstrom-Meßvorrichtung (66) zugeordnet. Das Signal der Massenstom-Meßvorrichtung erlaubt jedoch keine Richtungserkennung, immer tritt nur eine Kühlung des geheizten Sensors auf.Zur Erkennung der Strömungsrichtung sind in Strömungsrichtung gesehen jeweils vor und hinter dem thermischen Massenfluß-Sensor (16) Temperatur-Meßelemente (12 und 14) angeordnet, die in Fig. 1 schematisch als parallel zur Längsrichtung des thermischen Massenfluß-Sensors (16) verlaufende Widerstandsdrähte dargestellt sind.

Die Anordnung der Temperatur-Meßelemente (12 und 14) ist symmetrisch zum thermischen Massenfluß-Sensor (16). Erfolgt die Strömung beispielsweise in Fig. 1 von links nach rechts, so wird das Temperatur-Meßelement (12) vom unbeeinflußten Zustrom des Fluids umströmt, während das Temperatur-Meßelement (14) im Abstrom vom thermischen Massenfluß-Sensor (16) liegt. Somit wird in diesem Fall das Temperatur-Meßelement (14) zusätzlich erwärmt. Bei umgekehrter Strömungsrichtung, also von rechts nach links kehren sich die Strömungsverhältnisse an den Temperatur-Meßelementen um und damit tritt die umgekehrte Änderung deren elektrischer Eigenschaften ein. Zur Vermeidung des Einflusses von Turbulenzen sind beiderseits der Vorrichtung "Strömungsgleichrichter" (32 bzw. 34) angeordnet. Diese Strömungsgleichrichter sind wabenförmige Körper mit zahlreichen parallelen Strömungskanälen. Auf diese Weise ist sichergestellt, daß die eigentliche Meßvorrichtung stets laminar angeströmt ist.

Der Temperatur-Sensor (17), erstes Temperatur-Meßelement (12), Massenfluß-Sensor (16) und zweites Temperatur-Meßelement (14) sind -in Strömungsrichtung gesehen- in dieser Reihenfolge gemeinsam auf einer Halterung (1) angeordnet. Als Halterung (1) ist eine Platine vorgesehen, auf der die hier nicht dargestellten Anschlußleitungen für die einzelnen Sensoren bzw. Meßelemente angeordnet sind. Die Ebene des Halters (1) verläuft parallel zur Strömungsrichtung. Die Halterung (1) weist eine U-förmige längliche Aussparung (3) auf, deren offenes Ende dem einströmenden Medium zugewandt ist und deren Längsachse im Zentrum der Strömung angeordnet ist. Die Sensoren (16 und 17) sowie die Meßelemente (12 und 14) überbrücken die Aussparung und sind jeweils an ihren Enden mit den die Aussparung umgrenzenden Abschnitten der Halterung (1) verbunden. Vorzugsweise sind die Sensoren (16 und 17) und die Meßelemente (12 und 14) senkrecht zur Strömungsrichtung des Fluids angeordnet.

Außerhalb des Strömungskanals (10) ist auf der als Platine ausgebildeten Halterung (1) die elektronische Meß- und Regeleinheit (5) angeordnet, in welche die Massenfluß-Meßvorrichtung (66) integriert ist.

In Fig. 2 sind mit den Bezugszeichen (12) und (14) bzw. (42) und (44) die Widerstände einer Brückenschaltung bezeichnet, wobei die Widerstände (12 und 14) sowie (42 und 44) jeweils als Spannungsteiler geschaltet sind. Die Speisung der Brückenschaltung erfolgt über die Spannungs-/Stromquelle (50). Die Widerstände (42 und 44) sind Festwiderstände, die Widerstände (12 und 14) sind temperaturabhängige Widerstandselemente, die in voneinander verschiedenen Positionen zu dem Massenfluß-Sensor im strömenden Fluid angeordnet sind. Daher werden die temperaturabhängigen Widerstandselemente (12 und 14) von der Strömung verschieden stark erwärmt, so daß sich ihre Widerstände in verschiedenem Maße ändern. Dadurch tritt an den Meßpunkten zwischen den Widerständen (42 und 44) bzw. zwischen den Widerstandselementen (12 und 14) eine Spannungsdifferenz in der Brückendiagonalen auf. Aus dieser Spannungsdifferenz wird über einen Verstärker (52) ein Korrektursignal geformt.

Die von der Spannungsquelle (50) abgegebene Speisespannung für die Brückenschaltung wird in Abhängigkeit vom Meßsignal der Massenfluß-Meßvorrichtung (66) gesteuert.

In Fig. 3 sind mit den Bezugszeichen (112 und 114) Thermoelemente bezeichnet, die als Temperatur-Meßelememte (12, 14) in einer Anordnung gemäß Fig. 1 vorgesehen sind. Die beiden Thermoelemente sind mit je einem gleichpoligen Schenkel direkt miteinander verbunden, wobei die beiden anderen Schenkel mit einem Verstärker (52) verbunden sind. Auf diese Weise wird dem Verstärker (52) nur das Differenzsignal der beiden Thermoelemente (112, 114) zugeführt, das der Erkennung der Strömungsrichtung dient. Der Vorteil der Verwendung von Thermoelementen liegt nicht nur in deren schnellem Ansprechen, sondern auch darin, daß das Meßsignal unabhängig von einer äußeren Stromquelle zur Verfügung steht. Thermoelemente sind besonders in Dünnschicht- und Halbleitertechnik bei hohem Signal kostengünstig und vielgestaltig herstellbar.

Im Ausführungsbeispiel sind Thermoelemente aus Kupfer-Konstantan verwendet, wobei zur Erreichung einer höheren thermoelektrischen Spannung mehrere Paare zu einer Thermoelementbatterie hintereinander geschaltet sind.

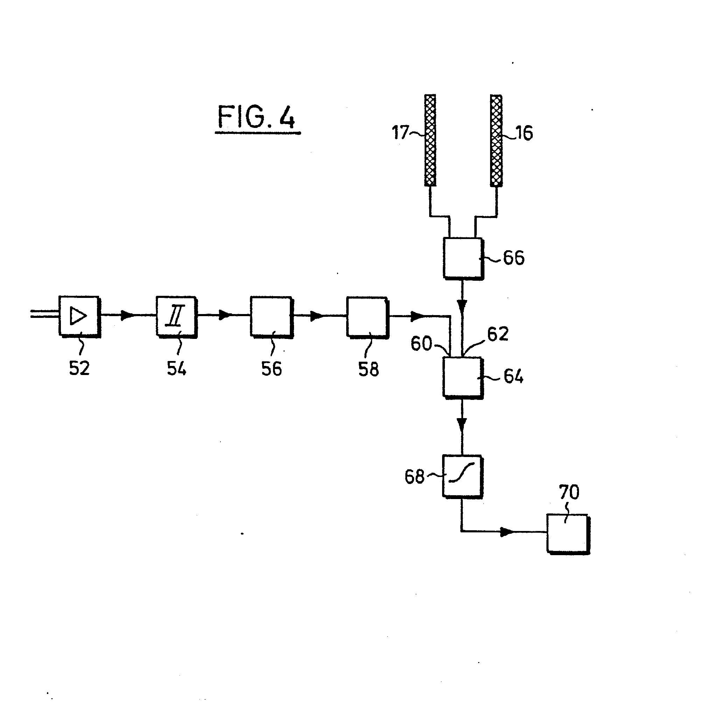

Fig. 4 zeigt schematisch die Weiterleitung des vom Verstärker (52) abgegebenen Korrektursignals. Ein als Schwellwertschalter dienender Schmitt-Trigger siebt einerseits zu niedrige Signale aus und gibt andererseits ein konstantes Signal unabhängig von der Größe des Eingangssignals weiter. Der Ausgang des Schmitt-Triggers (54) ist mit einem Eingang (60) einer Steuereinheit (64) verbunden. An einem weiteren Eingang (62) der Steuereinheit (64) wird das Meßsignal der Massenstrom-Meßvorrichtung (66) empfangen. Der Ausgang der Steuereinheit (64) ist mit einer Treibstoff-Dosiervorrichtung (70) verbunden. Die Pulsationen des Massenstromes, welche zu pulsierenden Signalen führen, werden mittels eines Integrators (68) geglättet. Da Massenstrom-

Meßvorrichtung (66) und die der Richtungserkennung dienenden Temperatur-Meßelemente (12 und 14) unterschiedliche Ansprechzeiten aufweisen, ist ein Phasenschieber (56) vorgesehen, welcher die Synchronisation der Signale bewirkt. Zur Korrektur der Impulslänge der Meßsignale ist weiterhin ein Monoflop (58) vorgesehen, der es ermöglicht, die Impulsdauer des Korrektursignals verschieden von der Impulslänge des Eingangssignales zu steuern.

Die Steuereinheit (64) hat die Aufgabe, das an die Treibstoff-Dosiervorrichtung abgegebene Signal, welches in der Hauptsache durch die Massenstrom-Meßvorrichtung beeinflußt ist, entsprechend dem Korrektursignal anzupassen. Entsprechend dem nur bei Rückströmung auftretenden Korrektursignal wird von der Steuereinheit, das während dieser Phase der Pulsation eingehende Meßsignal der Massenstrom-Meßvorrichtung entweder unterdrückt, vom Wert des während der übrigen Phase eingehenden Meßsignals abgezogen oder das Meßsignal auf einen zwischen dem Meßwert und Null liegenden Bruchteil reduziert, wobei das Maß des Bruchteils sowohl von der Motordrehzahl als auch von der Höhe des Massenstromes abhängig ist.

Die elektronischen Bausteine (42 - 68) sind zu der Meß- und Regeleinheit (5) zusammengefaßt und integral als Mikrochip ausgeführt oder in Hybridtechnologie. Dieser Mikrochip ist auf der in Fig. 1 dargestellten als Halterung (1) dienenden Platine angeordnet und direkt mit den Sensoren (17 und 16) sowie den Meßelementen (12 und 14) verbunden.

VDO Adolf Schindling AG

Gräfstraße 103
6000 Frankfurt/Main
28. Oktober 1986
2033

Patentansprüche:

1. Vorrichtung zur Bestimmung des Massenstromes und der Durchflußrichtung eines im wesentlichen gerichtet strömenden Fluids mit einer einen elektrothermischen Massenfluß-Sensor und einen Temperatur-Sensor aufweisenden Massenstrom-Meßvorrichtung und zumindest einem Temperatur-Meßelement, d a d u r c h   g e k e n n z e i c h n e t , daß benachbart zum thermischen Massenfluß-Sensor (16) zwei Temperatur-Meßelemente (12, 14) angeordnet sind, wobei je nach Strömungsrichtung das eine Temperatur-Meßelement (12 oder 14) im Zustrom und das andere Temperatur-Meßelement (14 bzw. 12) im Abstrom vom thermischen Massenfluß-Sensor (16) angeordnet ist.

2. Vorrichtung nach Anspruch 1,
d a d u r c h   g e k e n n z e i c h n e t ,
daß Massenfluß-Sensor (16), Temperatur-Sensor (17) und die
beiden Temperatur-Meßelemente (12 und 14) eine gemeinsame
Halterung aufweisen.

3. Vorrichtung nach Anspruch 1 oder 2,
d a d u r c h   g e k e n n z e i c h n e t ,
daß der thermische Massenfluß-Sensor (16) und die diesem
zugeordneten Temperatur-Meßelemente (12) und (14) in einem
Bereich laminarer Strömung angeordnet sind.

4. Vorrichtung nach einem der Ansprüche 1 bis 3,
d a d u r c h   g e k e n n z e i c h n e t ,
daß die Temperatur-Meßelemente (12, 14) als Spannungsteiler
in einer Brückenschaltung (12, 14, 42, 44) angeordnete
temperaturabhängige Widerstandselemente sind.

5. Vorrichtung nach Anspruch 4,
d a d u r c h   g e k e n n z e i c h n e t ,
daß die Widerstandselemente (12, 14) einen positiven
Temperatur-Koeffizienten aufweisen.

6. Vorrichtung nach Anspruch 4,
d a d u r c h   g e k e n n z e i c h n e t ,
daß die Widerstandselemente (12, 14) einen negativen
Temperatur-Koeffizienten aufweisen.

7. Vorrichtung nach Anspruch 5 oder 6,
d a d u r c h   g e k e n n z e i c h n e t ,
daß die Widerstandselemente (12, 14) drahtförmig ausgebildet sind.

0269781

8. Vorrichtung nach Anspruch 5 oder 6,
   d a d u r c h   g e k e n n z e i c h n e t ,
   daß die Widerstandselemente (12, 14) folienförmig ausgebildet sind.

9. Vorrichtung nach Anspruch 4,
   d a d u r c h   g e k e n n z e i c h n e t ,
   daß eine Regeleinheit (50) zur Regelung der Speisespannung
   der Brückenschaltung (12, 14; 42, 44) zur Einstellung einer
   über den gesamten Durchflußbereich gleichmäßigen
   Empfindlichkeit.

10. Vorrichtung nach Anspruch 9,
    d a d u r c h   g e k e n n z e i c h n e t ,
    daß die Regeleinheit (50) mit der Massenstrom-Meßvorrichtung (66) verbunden ist.

11. Vorrichtung nach einem der Ansprüche 1 bis 3,
    d a d u r c h   g e k e n n z e i c h n e t ,
    daß die Temperatur-Meßelemente Thermoelemente (112, 114)
    sind.

12. Vorrichtung nach Anspruch 11,
    d a d u r c h   g e k e n n z e i c h n e t ,
    daß die jeweils vor bzw. hinter dem Heizelement (16)
    angeordneten Thermoelemente (112, 114) mit entgegengesetzter
    Polarität elektrisch hintereinander geschaltet sind.

13. Vorrichtung nach Anspruch 1,
    d a d u r c h   g e k e n n z e i c h n e t ,
    daß diese in eine an sich bekannte Vorrichtung zur
    Steuerung der Treibstoffeinspritzung für einen Verbrennungsmotor in Abhängigkeit vom Massenstrom der
    angesaugten Luftmenge schaltungsmäßig integriert ist, wobei
    die Treibstoffdosierung in Abhängigkeit von den abgegebenen
    Signalen der Temperatur-Meßelemente (12, 14) erfolgt.

14. Vorrichtung nach Anspruch 13,
dadurch gekennzeichnet,
daß die Temperatur-Meßelemente mit dem Eingang eines Verstärkers (52) verbunden sind, dessen Ausgang über einen Schmitt-Trigger (54) mit dem Eingang (60) einer Steuereinheit (64) verbunden ist, welche mit einem zweiten Eingang (62) außerdem mit der Massenstrom-Meßvorrichtung (66) und ausgangsseitig mit einer Treibstoff-Dosiervorrichtung (70) verbunden ist.

15. Vorrichtung nach Anspruch 14,
dadurch gekennzeichnet,
daß zwischen dem Ausgang der Steuereinheit (64) und dem Eingang der Treibstoff-Dosiervorrichtung (66) ein Integrator (68) angeordnet ist.

16. Vorrichtung nach Anspruch 15,
dadurch gekennzeichnet,
daß zwischen dem Ausgang des Schmitt-Triggers (54) und dem Eingang (60) der Steuereinheit (64) ein Phasenschieber (56) und/oder ein Monoflop (58) angeordnet ist.

17. Vorrichtung nach Anspruch 14,
dadurch gekennzeichnet,
daß die Steuereinheit (64) das von der Massenfluß-Vorrichtung (66) nach Anspruch 15 eingehende Meßsignal solange unterdrückt, wie ein Korrektursignal am Eingang (60) anliegt.

18. Vorrichtung nach Anspruch 14,
dadurch gekennzeichnet,
daß die Steuereinheit (64) den während der Zeitdauer eines am Eingang (60) anliegenden Korrektursignals festgestellten Wert des Meßsignals von demjenigen Wert des Meßsignals subtrahiert, der im Zeitraum ausbleibenden Korrektursignals festgestellt ist.

19. Vorrichtung nach Anspruch 14,
d a d u r c h   g e k e n n z e i c h n e t ,
daß die Steuereinheit (64) den während der Zeitdauer eines
am Eingang (60) anliegenden Korrektursignals festgestellten
Wert des Meßsignals auf einen vorher bestimmten Bruchteil
reduziert.

20. Vorrichtung nach den Ansprüchen 2 und 13,
d a d u r c h   g e k e n n z e i c h n e t ,
daß die Sensoren (16 und 17), die Meßelemente (12 und 14)
und die elektronischen Bausteine (42 - 68) auf einer
gemeinsamen Halterung angeordnet sind, wobei die
elektronischen Bausteine (42 - 68) zu einer elektronischen
Meß- und Regeleinheit (5) wie Mikrochip zusammengefaßt
sind.

0269781

FIG.1

FIG.2

FIG.3

## FIG. 4

Europäisches
Patentamt

EUROPÄISCHER RECHERCHENBERICHT

0269781
Nummer der Anmeldung

EP 87 10 3661

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-1 488 012  (HAWKER SIDDELEY) * Seite 1, Zeilen 10-17; Seite 2, Zeilen 55-95; Seite 3, Zeilen 2-9; Figuren 1-3 * | 1,2,4-6 ,10,11 | G 01 P  13/02 G 01 P  5/12 G 01 F  1/68 G 01 P  13/00 |
| Y |  | 3,7-9, 12 |  |
| Y | EP-A-0 035 680  (DEGUSSA) * Seite 2, Zeile 23 - Seite 3, Zeile 10; Figuren 1-4 * | 3 |  |
| A |  | 8,13 |  |
| Y | US-A-3 995 481  (DJORUP) * Spalte 4, Zeilen 1-61; Spalte 6, Zeilen 38-57; Figuren 1-14,16 * | 7-9 |  |
| A |  | 5,6 |  |
| Y | DE-A-2 423 302  (OUTOKUMPU OY) * Seite 2, Zeile 27 - Seite 3, Zeile 12; Figuren 1,2 * | 12 |  |
| A |  | 5,6 | RECHERCHIERTE SACHGEBIETE (Int. Cl.4). |
| X | PATENT ABSTRACTS OF JAPAN, Band 6, Nr. 168 (P-139)[1046], 2. September 1982; & JP-A-57 86 058 (MATSUSHITA DENKI SANGYO K.K.) 28-05-1982 * Insgesamt; Figur * | 1,2,8 | G 01 P G 01 F |

Der vorliegende Recherchenbericht wurde für alle Patentansprüche erstellt

| Recherchenort | Abschlußdatum der Recherche | Prüfer |
|---|---|---|
| DEN HAAG | 12-02-1988 | HANSEN P. |

EPO FORM 1503 03.82 (P0403)